# EUROPEAN PATENT APPLICATION

(11) **EP 2 983 238 A1**
(43) Date of publication of application: **10.02.2016**
(21) Application number: 13878888.0
(22) Date of filing: 04.12.2013
(51) Int. Cl.: H01M 10/48, H02J 7/10, H02J 13/00

(54) **MANAGEMENT DEVICE, COMMUNICATION DEVICE, MANAGEMENT METHOD, AND MANAGEMENT SYSTEM**

(30) Priority: 22.03.2013 JP 2013059198
(71) Applicant: Sony Corporation, Tokyo 108-0075 (JP)
(72) Inventor: WASHIRO, Takanori, Tokyo 108-0075 (JP)
(74) Representative: Witte, Weller & Partner Patentanwälte mbB
(86) International application number: PCT/JP2013/082638
(87) International publication number: WO 2014/147896

(57) **Abstract**

There is provided a management apparatus, including a processing unit which performs a process related to management of a battery cell, based on information related to the battery cell, acquired via a power line connected to the battery cell from a communication apparatus electrically connected to the power line. The information related to the battery cell includes sensor information showing a detection result detected by a sensor which detects a state of the battery cell. The processing unit performs a process according to the detection result of the sensor.

## Description

### Technical Field

The present disclosure relates to a management apparatus, a communication apparatus, a management method, and a management system.

### Background Art

Technology which manages a battery has been developed. The technology disclosed in the following Patent Literature 1 can be included, for example, as technology which attempts simplification of the management a battery included in a battery apparatus, by using battery information acquired from this battery apparatus, via a power line connected to the battery apparatus.

### Citation List

### Patent Literature

Patent Literature 1: JP 2012-110097A

### Summary of Invention

### Technical Problem

In the case of using the technology disclosed in Patent Literature 1, for example, a battery is managed by using battery information which includes identification information, history information, specification information and billing information of the battery. However, the management of a battery is not limited to using battery information which includes identification information, history information, specification information and billing information of the battery, for example, such as in the technology disclosed in Patent Literature 1.

The present disclosure proposes a new and improved management apparatus, communication apparatus, management method, and management system capable of managing a battery cell, based on a detected state of the battery cell.

### Solution to Problem

According to the present disclosure, there is provided a management apparatus, including: a processing unit which performs a process related to management of a battery cell, based on information related to the battery cell, acquired via a power line connected to the battery cell from a communication apparatus electrically connected to the power line. The information related to the battery cell includes sensor information showing a detection result detected by a sensor which detects a state of the battery cell. The processing unit performs a process according to the detection result of the sensor.

According to the present disclosure, there is provided a communication apparatus, including: a communication unit, electrically connected to a power line connected to a battery cell, which is driven by obtaining power from a high-frequency signal with a frequency higher than a frequency of power flowing in the power line, transmitted from an external apparatus via the power line, which supplies the power obtained from the high-frequency signal to a sensor which detects a state of the battery cell, and which transmits information related to the battery cell, obtained from the sensor driven by the supplied power, and including sensor information showing a detection result detected by the sensor, to the external apparatus by load modulation via the power line.

According to the present disclosure, there is provided a management method, including: a step which performs a process related to management of a battery cell, based on information related to the battery cell, acquired via a power line connected to the battery cell from a communication apparatus electrically connected to the power line. The information related to the battery cell includes sensor information showing a detection result detected by a sensor which detects a state of the battery cell. A process according to the detection result of the sensor is performed in the step which performs the process related to the management of the battery cell.

According to the present disclosure, there is provided a management system, including: a communication apparatus electrically connected to a power line connected to a battery cell; and a management apparatus which performs a process related to management of the battery cell, based on information related to the battery cell, acquired via the power line from the communication apparatus. The communication apparatus includes a communication unit, which is driven by obtaining power from a high-frequency signal with a frequency higher than a frequency of power flowing in the power line, transmitted by the management apparatus via the power line, which supplies the power obtained from the high-frequency signal to a sensor which detects a state of the battery cell, and which transmits the information related to the battery cell, obtained from the sensor driven by the supplied power, and including sensor information showing a detection result detected by the sensor, to the management apparatus by load modulation via the power line. The management apparatus includes a processing unit which performs a process related to management of the battery cell, based on the information related to the battery cell, transmitted from the communication apparatus. The processing unit performs a process according to the detection result of the sensor shown by the sensor information included in the information related to the battery cell.

### Advantageous Effects of Invention

According to an embodiment of the present disclosure, a battery cell can be managed, based on a detected state of the battery cell.

### Brief Description of Drawings

[FIG. 1] FIG. 1 is an explanatory diagram illustrating an example of the configuration of a management system according to a first embodiment.
[FIG. 2] FIG. 2 is an explanatory diagram illustrating an example of the configuration of a communication unit included in a management apparatus according to an embodiment.
[FIG. 3] FIG. 3 is an explanatory diagram illustrating another example of a communication unit included in a management apparatus according to an embodiment.
[FIG. 4] FIG. 4 is an explanatory diagram illustrating an example of the configuration of a communication unit included in a communication apparatus according to an embodiment.
[FIG. 5] FIG. 5 is an explanatory diagram illustrating another example of the configuration of a communication unit included in a communication apparatus according to an embodiment.
[FIG. 6] FIG. 6 is an explanatory diagram illustrating an example of the configuration of a filter according to an embodiment.
[FIG. 7] FIG. 7 is an explanatory diagram illustrating an example of the configuration of a management system according to a second embodiment.
[FIG. 8] FIG. 8 is an explanatory diagram illustrating an example of the configuration of a management system according to a third embodiment.
[FIG. 9] FIG. 9 is an explanatory diagram illustrating an example of the configuration of a management system according to a fourth embodiment.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Hereinafter, the description will be made in the following order.
1. Management method according to the embodiment
2. Management system according to the embodiment
3. Program according to the embodiment

### (Management method according to the embodiment)

Before the configuration of each apparatus included in a management system according to an embodiment is described, a management method according to the embodiment will be first described. Hereinafter, the management method according to the embodiment will be described exemplifying a case in which a management apparatus according to the embodiment included in the management system according to the embodiment performs a process related to the management method according to the embodiment.

The management apparatus according to the embodiment performs a process (management process) related to the management of a battery cell, based on information related to the battery cell which becomes a management target, acquired via a power line. The management apparatus according to the embodiment acquires information related to the battery cell according to the embodiment, via the power line, for example, from a communication apparatus (an example of an external apparatus) which constitutes a management system according to the embodiment, which will be described below. Here, a battery cell which constitutes a secondary battery such as a lithium ion battery can be included, for example, as the battery cell according to the embodiment. Note that, communication according to the embodiment, such as communication relating to the acquisition of information related to the battery cell according to the embodiment, will be described later.

Here, sensor information (data) showing a detection result detected by a sensor which detects a state of the battery cell, for example, is included in the information related to the battery cell according to the embodiment. Note that, information included in the information related to the battery cell according to the embodiment is not limited to that described above. For example, various types of information (data) showing a state of the battery cell, such as cell state information (data) showing a charge state or a discharge state by the battery cell, may be included in the information related to the battery cell according to the embodiment.

A temperature sensor which detects a temperature of the battery cell, a voltage sensor which detects a voltage of the battery cell (voltage output from the battery cell), a current sensor which detects a current of the battery cell (current output from the battery cell), or the like can be included, for example, as the sensor according to the embodiment. That is, sensor information included in the embodiment shows one or two or more of a temperature of the battery cell, a voltage of the battery cell, a current of the battery cell or the like, for example, in accordance with the type of sensor which constitutes the management system according to the embodiment.

More specifically, the management apparatus according to the embodiment performs a process according to a detection result of the sensor shown by the acquired sensor information, such as illustrated in the following (1) to (6), for example, as the management process according to the embodiment.

(1) First example of a management process according to the embodiment:
   Management process according to the embodiment, in the case where the acquired sensor information shows a temperature of the battery cell detected by a temperature sensor.

For example, when a short circuit occurs in a battery apparatus which includes the battery cell (for example, a battery pack or a battery module), there is a high possibility that the battery cell will rapidly overheat. Overheating of the battery cell may cause various undesirable phenomena, such as shortening the life-span of the battery cell or having an explosion or ignition of the battery cell occur. Here, a short circuit in the battery apparatus will occur within the battery apparatus, for example, by having an external force applied to the battery apparatus or the like.

Accordingly, in the management system according to the embodiment, for example, a temperature of the battery cell is detected by having a temperature sensor as the sensor according to the embodiment.

In the case where the acquired sensor information shows a temperature of the battery cell detected by the temperature sensor, the management apparatus according to the embodiment determines a state of the battery cell, for example, based on the temperature of the battery cell shown by the sensor information.

The management apparatus according to the embodiment compares the temperature of the battery cell shown by the sensor information and a standard value relating to the temperature, for example, and in the case where the temperature of the battery cell shown by the sensor information is larger than the standard value relating to this temperature (or in the case where this temperature of the battery cell is at or more than the standard value relating to this temperature), determines that the battery cell is not normal. Further, the management apparatus according to the embodiment compares the temperature of the battery cell shown by the sensor information and a standard value relating to the temperature, for example, and in the case where the temperature of the battery cell shown by the sensor information is at or less than the standard value relating to this temperature (or in the case where this temperature of the battery cell is smaller than the standard value relating to this temperature), determines that the battery cell is normal.

Here, for example, the standard value relating to the temperature according to the embodiment may be a fixed value set in advance, or may be a changeable value capable of being changed by a user operation or the like.

When the state of the battery cell is determined, in the case where it is determined that the battery cell is not normal, the management apparatus according to the embodiment causes the use of the battery cell to be restricted.

Here, the management apparatus according to the embodiment causing a control signal for operating a protection circuit included in a battery apparatus including the battery cell to be transmitted to the battery apparatus via a power line, in the communication unit included in the management apparatus according to the embodiment, which will be described below (or an external communication device having a configuration and functions the same as those of this communication unit. Hereinafter, called the same), can be included, for example, as the process for restricting the use of the battery cell according to the embodiment. For example, by causing the management apparatus according to the embodiment to transmit the above described control signal to the battery apparatus, it becomes possible to prevent overheating of the battery cell, by having a protection circuit operated.

Note that, in the case where it is determined that the battery cell is not normal, the management process according to the embodiment will not be limited to that described above.

For example, in the case where it is determined that the battery cell is not normal, the management apparatus according to the embodiment may notify that the battery cell is not normal to a user. The management apparatus according to the embodiment notifies that the battery cell is not normal to a user, by an arbitrary method in which the user is capable of recognizing that the battery cell is not normal, such as a visual notification method which causes characters, images or the like to be displayed on a display screen, or an aural method which causes audio (also including music) to be output.

(2) Second example of a management process according to the embodiment:
   First example of a management process according to the embodiment, in the case where the acquired sensor information shows a voltage of the battery cell detected by a voltage sensor.

For example, the battery cell generates heat in the case where the battery cell is charging, and in the case where the battery cell is excessively charged, there will be a high possibility that the battery cell overheats. Overheating of the battery cell may causes various undesirable phenomena, such as shortening the life-span of the battery cell or having an explosion or ignition of the battery cell occur, such as described above.

Accordingly, in the management system according to the embodiment, for example, a voltage of the battery cell is detected by having a voltage sensor as the sensor according to the embodiment.

Sensor information showing a voltage of the battery cell detected by the voltage sensor is included in the acquired information related to the battery cell according to the embodiment, and in the case where it is determined that it is in a state where the battery cell is charging, the management apparatus according to the embodiment performs a charge control for the battery cell, based on the voltage of the battery cell shown by the acquired sensor information.

Here, in the case where cell state information which shows that it is in a state where the battery cell is charging is included in the acquired information related to the battery cell according to the embodiment, the management apparatus according to the embodiment determines that it is in a state where the battery cell is charging, for example, based on the cell state information.

Note that, the method which determines that it is in a state were the battery cell is charging according to the embodiment is not limited to that described above. For example, by using a detection result of the sensor shown by the sensor information, such as sensor information which shows a current of the battery cell detected by a current sensor, it is possible for the management apparatus according to the embodiment to determine that it is in a state where the battery cell is charging.

Further, the management apparatus according to the embodiment causing a control signal for performing a voltage control relating to a charge by a prescribed accuracy (for example, an accuracy of several ten (mv) units) to be transmitted to a battery apparatus including the battery cell, via a power line, in the communication unit included in the management apparatus according to the embodiment, which will be described below, can be included, for example, as the process relating to a charge control according to the embodiment. For example, by causing the management apparatus according to the embodiment to transmit the above described control signal to the battery apparatus, a voltage control (charge control) relating to a charge according to the above described control signal is performed, in the battery apparatus, by a control circuit which controls the charging and discharging of the battery cell included in the battery apparatus. Therefore, in the battery apparatus, an excess charge of the battery cell is prevented.

(3) Third example of a management process according to the embodiment:
   Second example of a management process according to the embodiment, in the case where the acquired sensor information shows a voltage of the battery cell detected by a voltage sensor.
   For example, in the case where the battery cell is excessively discharged, there is a high possibility that the battery cell is not able to function as a secondary battery, or in this case, the battery cell overheats. Overheating of the battery cell may cause various undesirable phenomena, such as shortening the life-span of the battery cell or having an explosion or ignition of the battery cell occur, such as described above.

Accordingly, in the management system according to the embodiment, for example, a voltage of the battery cell is detected by having a voltage sensor as the sensor according to the embodiment.

Sensor information showing a voltage of the battery cell detected by the voltage sensor is included in the acquired information related to the battery cell according to the embodiment, and in the case where it is determined that it is in a state where the battery cell is discharging, the management apparatus according to the embodiment determines a discharge state of the battery cell, based on the voltage of the battery cell shown by the acquired sensor information.

Here, in the case where cell state information which shows that it is in a state where the battery cell is discharging is included in the acquired information related to the battery cell according to the embodiment, the management apparatus according to the embodiment determines that it is in a state where the battery cell is discharging, for example, based on the cell state information.

Note that, the method which determines that it is in a state where the battery cell is discharging according to the embodiment is not limited to that described above. For example, by using a detection result of the sensor shown by the sensor information, such as sensor information which shows a current of the battery cell detected by a current sensor, it is possible for the management apparatus according to the embodiment to determine that it is in a state where the battery cell is discharging.

The management apparatus according to the embodiment determines a discharge state of the battery cell, for example, by comparing the voltage of the battery cell shown by the sensor information and a standard value relating to the voltage. For example, the management apparatus according to the embodiment compares the voltage of the battery cell shown by the sensor information and a standard value relating to the voltage, and in the case where the voltage of the battery cell shown by the sensor information is at or less than the standard value relating to this voltage (or in the case where this voltage of the battery cell is smaller than the standard value relating to this voltage), determines that the battery cell is in a state where there is a possibility of an excessive discharge occurring. Further, the management apparatus according to the embodiment compares the voltage of the battery cell shown by the sensor information and a standard value relating to the voltage, for example, and in the case where the voltage of the battery cell shown by the sensor information is larger than the standard value relating to this voltage (or in the case where this voltage of the battery cell is at or more than the standard value relating to this voltage), determines that the battery cell is in a normal state.

Note that, the determination method of a discharge state of the battery cell according to the embodiment is not limited to that described above. For example, by comparing the voltage of the battery cell shown by the sensor information and a plurality of standard values relating to the voltage, it is possible for the management apparatus according to the embodiment to determine a discharge state of the battery cell in more detail than that of two stages such as in the example illustrated above.

When the discharge state of the battery cell is determined, the management apparatus according to the embodiment causes the discharge of the battery cell to be restricted, in accordance with a determination result.

Here, the management apparatus according to the embodiment causing a control signal for operating a protection circuit included in a battery apparatus including the battery cell to be transmitted to a battery apparatus via the power line, in the communication unit, which will be described below, can be included, for example, as the process for restricting a discharge of the battery cell according to the embodiment. For example, by causing the management apparatus according to the embodiment to transmit the above described control signal to the battery apparatus, an excessive discharge of the battery cell is prevented, by having a protection circuit operated.

(4) Fourth example of a management process according to the embodiment: Third example of a management process according to the embodiment, in the case where the acquired sensor information shows a voltage of the battery cell detected by a voltage sensor.

The management process according to the embodiment, in the case where the acquired sensor information shows a voltage of the battery cell detected by the voltage sensor, is not limited to the management process relating to the second example illustrated in the above described (2) and the management process relating to the third example illustrated in the above described (3).

For example, in the case where sensor information showing a voltage of the battery cell detected by the voltage sensor is included in the acquired information related to the battery cell according to the embodiment, it is possible for the management apparatus according to the embodiment to estimate a charge amount accumulated in the battery cell, based on the voltage of the battery cell shown by the sensor information.

The management apparatus according to the embodiment estimates a charge amount accumulated in the battery cell, for example, by calculating a current, based on the voltage of the battery cell shown by the sensor information and a resistance value relating to the detection of this voltage, and integrating the calculated current. Here, for example, the management apparatus according to the embodiment may use a value set in advance as a resistance value relating to the detection of the above described voltage, and in the case where information showing a resistance value relating to the detection of the above described voltage is included in the sensor information, may use a resistance value relating to the detection of the voltage included in the sensor information.

Note that, the estimation method of a charge amount accumulated in the battery cell according to the embodiment is not limited to that described above. For example, in the case where sensor information showing a current of the battery cell detected by a current sensor is included in the acquired information related to the battery cell according to the embodiment, it is possible for the management apparatus according to the embodiment to estimate a charge amount accumulated in the battery cell, by integrating a current of the battery cell shown by the sensor information.

(5) Fifth example of a management process according to the embodiment:
   Process relating to the recording of log information based on a detection result of a sensor.

The management apparatus according to the embodiment causes log information (data) based on a detection result of the sensor, shown by the sensor information included in the acquired information related to the battery cell according to the embodiment, to be transmitted to the communication apparatus according to the embodiment, which will be described below, in a communication unit included in the management apparatus according to the embodiment, via a power line. Also, the management apparatus according to the embodiment causes log information to be recorded to a recording medium corresponding to the battery cell, in the communication apparatus according to the embodiment.

The management apparatus according to the embodiment causes log information to be recorded in a recording medium corresponding to the battery cell, in the communication apparatus according to the embodiment, by transmitting log information, and a recording command for recording the log information in the recording medium, to the communication unit according to the embodiment via a power line.

Here, data showing a detection result of the sensor shown by the sensor information can be included, for example, as the log information according to the embodiment. Further, for example, the time at which the management apparatus according to the embodiment has acquired the sensor information may be recorded in the log information according to the embodiment in association with a detection result of the sensor.

Further, while a recording medium included in the battery cell can be included, for example, as the recording medium corresponding to the battery cell according to the embodiment, the recording medium corresponding to the battery cell according to the embodiment is not limited to that described above. For example, the recording medium corresponding to the battery cell according to the embodiment may be a recording medium included in the communication apparatus according to the embodiment.

By referring to log information recorded in the recording medium corresponding to the battery cell according to the embodiment, it becomes possible to determine (or estimate) a state of the battery cell according to the embodiment (for example, the life-span of the battery cell, the present performance, the usage history or the like), by a log shown by the log information. Therefore, by having the management apparatus according to the embodiment cause log information, and a recording command for recording the log information in a recording medium, to be transmitted to the communication apparatus according to the embodiment via a power line, for example, it becomes possible to perform a determination of a value of the battery cell (for example, a value determined by the life-span of the battery cell, the present performance, the usage history or the like), acquired from the battery apparatus including the battery cell.

(6) Sixth example of a management process according to the embodiment.
The management apparatus according to the embodiment may perform two or more processes of the management process relating to the first example illustrated in the above described (1) to the management process relating to the fifth example illustrated in the above described (5).

The management apparatus according to the embodiment performs a process according to a detection result of the sensor shown by the acquired sensor information, such as illustrated in the management process relating to the first example illustrated in the above described (1) to the management process relating to the sixth example illustrated in the above described (6), as the management process according to the embodiment.

Here, the sensor information according to the embodiment shows a detection result detected by the sensor which detects a state of the battery cell. That is, in the case where the management apparatus according to the embodiment performs a process according to a detection result of the sensor shown by the acquired sensor information, such as illustrated in the management process relating to the first example illustrated in the above described (1) to the management process relating to the sixth embodiment illustrated in the above described (6), for example, the management apparatus according to the embodiment performs a process based on a detected state of the battery cell.

Therefore, by having the management apparatus according to the embodiment perform a process according to a detection result of the sensor shown by the acquired sensor information, such as the management process relating to the first example illustrated in the above described (1) to the management process relating to the sixth embodiment illustrated in the above described (6), for example, the management apparatus according to the embodiment can manage the battery cell, based on a detected state of the battery cell. Note that, it is needless to say that the process according to a detection result of the sensor shown by the sensor information according to the embodiment is not limited to the examples illustrated in the management process relating to the first example illustrated in the above described (1) to the management process relating to the sixth embodiment illustrated in the above described (6).

Note that, the management process according to the embodiment is not limited to the process according to a detection result of the sensor shown by the acquired sensor information. For example, it is possible for the management apparatus according to the embodiment to perform processes such as illustrated in (7) and (8) illustrated hereinafter.

(7) Sixth example of a management process according to the embodiment:
   Process relating to the authentication of the battery cell.
   In the case where identification information showing the battery cell is included in the acquired information related to the battery cell, the management process according to the embodiment authenticates the battery cell, based on the identification information.

Here, identification information according to the embodiment is information (data) capable of being used for the identification of the battery cell. Data which shows an identification number particular to the battery cell, data which shows the type of the battery cell (for example, data which shows the serial number, maximum rating or the like) or the like can be included, for example, as the identification information according to the embodiment. Note that, the identification information according to the embodiment will not be limited to the above described example, for example, if it is information (data) capable of being used for the identification of the battery cell, such as manufacturing data of the battery cell (for example, data which shows the manufacturing date or the manufacturer).

The management process according to the embodiment authenticates the battery cell, for example, based on whether or not identification information corresponding to the acquired identification information is stored in a database in which identification information corresponding to battery cells capable of being usually authenticated is recorded. Here, the above described database may be stored in a recording medium such as a storage unit (which will be described below) included in the management apparatus according to the embodiment, or may be stored in a recording medium included in an external apparatus such as a server. In the case where the above described database is stored in a recording medium included in an external apparatus, for example, the management process according to the embodiment acquires the above described database from this external apparatus by performing wired or wireless communication with the external apparatus, and authenticates the battery cell by using the acquired database.

As described above, for example, by having the management process according to the embodiment authenticate the battery cell, even in the case where one or two or more battery cells are replaced in a battery apparatus including a plurality of battery cells, it becomes possible to detect whether or not the replaced battery cells are improper battery cells. Therefore, by having the management process according to the embodiment authenticate the battery cell, for example, the business characteristics of a maker selling the battery apparatus, the reliability of the battery apparatus which is sold or the like can be secured.

(8) Seventh example of a management process according to the embodiment: Process relating to the recording of a usage history of the battery apparatus.
The management apparatus according to the embodiment causes power supply information (data) related to power supplied by a power supply apparatus (for example, a charger or the like) to the battery apparatus including the battery cell, and history information (data) related to a usage history of power in a power reception apparatus (for example, an electronic device or the like) to which power is supplied from this battery apparatus, for example, to be transmitted to the communication apparatus according to the embodiment, which will be described below, in the communication unit according to the embodiment, via a power line. Also, for example, the management apparatus according to the embodiment causes the transmitted power supply information and history information to be recorded in a recording medium corresponding to the battery cell, in the communication apparatus according to the embodiment.

The management apparatus according to the embodiment causes power supply information and history information to be recorded in a recording medium corresponding to the battery cell, in the communication apparatus according to the embodiment, for example, by causing the power supply information and history information, and a recording command for recording the power supply information and history information in the recording medium, to be transmitted to the communication unit according to the embodiment via a power line.

Here, data which shows the power amount supplied by the power supply apparatus to the battery apparatus, data which shows the supply time at which the power supply apparatus has supplied to the battery apparatus, data which shows the frequency at which the power supply apparatus has supplied to the battery apparatus or the like can be included, for example, as the power supply information according to the embodiment. The management apparatus according to the embodiment acquires the power supply information from the power supply apparatus, for example, by performing wired or wireless communication with the power supply apparatus. Note that, for example, data which shows the time at which the management apparatus according to the embodiment has acquired the power supply information may further be included in the power supply information according to the embodiment.

Further, data which shows the power consumption amount of the power reception apparatus, data which shows the time at which the power reception apparatus has consumed power or the like can be included, for example, as the history information according to the embodiment. The management apparatus according to the embodiment acquires the history information from the power reception apparatus, for example, by performing wired or wireless communication with the power reception apparatus. Note that, for example, data which shows the time at which the management apparatus according to the embodiment has acquired the power reception information may further be included in the power reception information according to the embodiment.

By referring to the power supply information and history information recorded in a recording medium corresponding to the battery cell according to the embodiment, it becomes possible to determine (or estimate) a state of the battery cell according to the embodiment (for example, the life-span of the battery cell, the present performance, the usage history or the like), by various types of data shown by the power supply information and history information. Therefore, by having the management apparatus according to the embodiment cause the power supply information and history information, and a recording command for recording the power supply information and history information in a recording medium, for example, to be transmitted to the communication apparatus according to the embodiment via a power line, it becomes possible to perform a determination of a value of the battery cell (for example, a value determined by the life-span of the battery cell, the present performance, the usage history or the like), acquired from the battery apparatus including the battery cell.

### (Management system according to the embodiment)

Next, an example of the configuration of a management system according to the embodiment, which includes the management apparatus according to the embodiment, capable of performing the above described process relating to the management method according to the embodiment, will be described. Hereinafter, an example of the configuration of each apparatus constituting the management system according to the embodiment will be described, while describing an example of the configuration of a management system according to the embodiment.

### [1] Configuration example of the management system according to a first embodiment

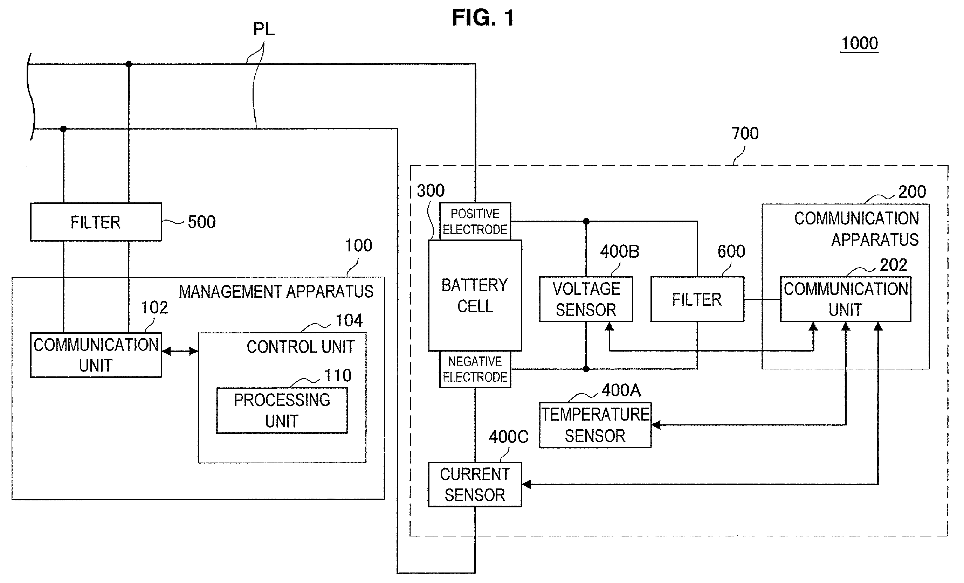

FIG. 1 is an explanatory diagram illustrating an example of the configuration of a management system 1000 according to a first embodiment.

The management system 1000 has, for example, a management apparatus 100, a communication apparatus 200, a battery cell 300, a temperature sensor 400A, a voltage sensor 400B and a current sensor 400C (hereinafter, there will be cases where these are collectively illustrated as a "sensor 400"), a filter 500, and a filter 600. Here, in FIG. 1, for example, the communication apparatus 200, the battery cell 300, the sensor 400 and the filter 600 correspond to a battery apparatus 700.

Note that, the configuration of the battery apparatus according to the embodiment is not limited to the example illustrated in FIG. 1. For example, the battery apparatus according to the embodiment may have the management apparatus 100, the communication apparatus 200, the battery cell 300, the sensor 400, the filter 500 and the filter 600. In the case where the battery apparatus according to the embodiment is a configuration which has the management apparatus 100, for example, a control circuit or the like which controls the charging and discharging of the battery cell 300, included in the battery apparatus according to the embodiment, serves the role of the management apparatus 100.

Further, in the management system 1000, for example, each of the management apparatus 100, the communication apparatus 200 and the battery cell 300 are electrically connected to a power line PL. Here, the power line PL according to the embodiment corresponds to a power charge and discharge path of the battery cell. Direct-current, or an alternating-current of a frequency (for example, 50[Hz] or 60[Hz]) lower than a high-frequency signal according to the embodiment, which will be described below, for example, flows in the power line PL.

### [1-1] Management apparatus 100

The management apparatus 100 includes, for example, a communication unit 102 and a control unit 104.

The management apparatus 100 may include, for example, a read-only memory (ROM) (not illustrated), a random access memory (RAM) (not illustrated), a storage unit (not illustrated), a manipulation unit (not illustrated) which a user can manipulate, and a display unit (not illustrated) which displays various screens on a display screen. In the management apparatus 100, these constituent elements are connected by, for example, a bus serving as a data transmission line.

Here, the ROM (not illustrated) stores a program used by the control unit 104 or control data such as an arithmetic parameter. The RAM (not illustrated) temporarily stores a program or the like executed by the control unit 104.

The storage unit (not illustrated) is a storage means included in the management apparatus 100 and stores, for example, various kinds of data such as acquired information on battery cells, and applications. Here, examples of the storage unit (not illustrated) include a magnetic recording medium such as hard disk and a nonvolatile memory such as a flash memory. The storage unit (not illustrated) may be detachably mounted on the management apparatus 100.

The manipulation unit (not illustrated) is a manipulation means included in the management apparatus 100. Examples of the manipulation unit (not illustrated) include a button, a direction key, a rotary selector such as a jog dial, and a combination thereof.

The display unit (not illustrated) is a display means included in the management apparatus 100. Examples of the display unit (not illustrated) include a liquid crystal display and an organic electro-luminescence (EL) display (or an organic light emitting diode (OLED) display). The display unit (not illustrated) may be, for example, a device through which display and user manipulation are possible, such as a touch screen.

The management apparatus 100 may be connected to an external device such as a manipulation input device (for example, a keyboard or a mouse) or a display device which is an external apparatus of the management apparatus 100.

The communication unit 102 communicates with the communication apparatus 200 via a power line PL.

### [Communication via a power line according to the embodiment]

Here, communication via a power line PL according to the embodiment (hereinafter referred to as "power line communication") will be described more specifically.

The power line communication is performed between the communication unit 102 (or an external communication device having the same function or configuration as the communication unit 102 and the same applies below) and the communication apparatus 200, for example, by applying a wireless communication technology such as a communication technology by near field communication (NFC) or a radio-frequency identification (RFID) technology to wired communication. Here, examples of the power line communication according to the embodiment include communication performed by contacting a terminal of each apparatus (so-called contact communication) and communication performed when a terminal of each apparatus is connected in a wired manner.

The communication unit 102 includes, for example, a high-frequency signal generation unit (which will be described below) that generates a high-frequency signal and transmits the high-frequency signal to the external communication apparatus. That is, the communication unit 102 has so-called reader and writer functions.

The communication apparatus 200 according to the embodiment communicates with the external apparatus, for example, by performing load modulation based on a signal transmitted from the external apparatus such as the management apparatus 100 including the communication unit 102 and transmitting signals corresponding to the signal transmitted from the external apparatus. For example, when the communication apparatus 200 receives a high-frequency signal transmitted from the communication unit 102, it obtains power from the received high-frequency signal to be driven and transmits a high-frequency signal by performing the load modulation based on the result obtained by processing the received high-frequency signal.

Here, examples of the high-frequency signal according to the embodiment include a signal with a frequency used for RFID and a signal with a frequency used for contactless communication. Examples of the frequency of the high-frequency signal include 130 [kHz] to 135 [kHz], 13.56 [MHz], 56 [MHz], 433 [MHz], 915.9 to 928.1 [MHz], 2441.75 [MHz], and 2448.875 [MHz], but the frequency of the high-frequency according to the embodiment is not limited thereto.

For example, the communication unit 102 and the communication apparatus 200 perform the foregoing process so that the power line communication according to the embodiment is realized between the communication unit 102 and the communication apparatus 200.

Here, a circuit size of the communication device using a wireless communication technology such as a communication technology by NFC can be miniaturized up to the size of an integrated circuit (IC) chip or the like due to the size relatively smaller than the size of an existing power-line communication (PLC) modem or the like. For example, since apparatuses capable of performing communication using wireless communication technologies such as communication technologies by NFC, such as mobile phones on which IC cards or IC chips are mounted, have become widespread, communication devices using wireless communication technologies such as communication technologies by NFC or RFID technologies have become cheaper than existing PLC modems.

By applying a wireless communication technology such as a communication technology by NFC or an RFID technology to wired communication, the communication apparatus 200 can obtain power from a high-frequency signal received via a power line PL to be driven and transmit a signal by performing load modulation. That is, in the management system according to the embodiment, which includes the communication unit 102 and the communication apparatus 200, the communication apparatus 200 can perform communication in a wired manner even when it does not include a separate power supply circuit performing communication. For example, the communication apparatus 200 can transmit a signal by performing the load modulation even when a signal (a signal indicating a user instruction) according to a user's manipulation is not input.

Accordingly, by using the wireless communication technology such as the communication technology by NFC or the RFID technology, for example, it is possible to realize wired communication in which a reduction in cost, alleviation of restriction on the size of the communication device, a reduction in power consumption, and the like can be realized compared to a case in which wired communication such as the existing PLC is used.

The power line communication according to the embodiment is not limited to the communication in which the wireless communication technology such as the communication technology by NFC or the RFID technology is used. For example, power line communication such as PLC may be performed between the communication unit 102 and the communication apparatus 200. When the power line communication such as PLC is performed between the communication unit 102 and the external communication apparatus, each of the communication unit 102 and the external communication apparatus includes, for example, a device related to the power line communication such as a PLC modem.

Hereinafter, an example of the configuration of each of the communication unit 102 and the communication apparatus 200 will be described exemplifying a case in which the power line communication in which the wireless communication technology such as the communication technology by NFC or the RFID technology is used is performed between the communication unit 102 and the communication apparatus 200.

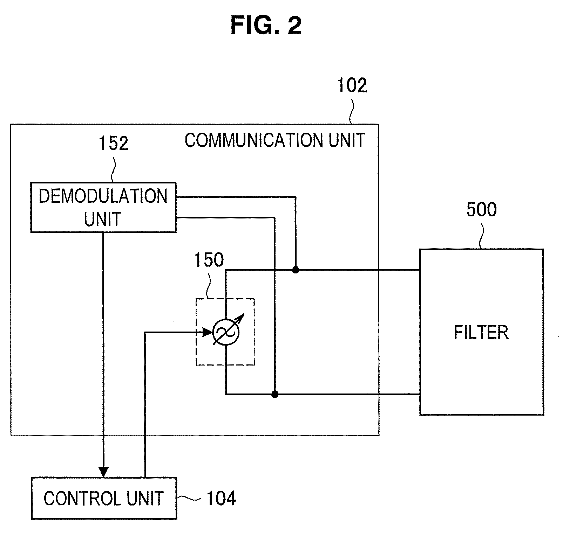

FIG. 2 is an explanatory diagram illustrating an example of the configuration of the communication unit 102 included in the management apparatus 100 according to the embodiment. Here, the control unit 104 and the filter 500 are illustrated together in FIG. 2.

The communication unit 102 includes, for example, a high-frequency signal generation unit 150 and a demodulation unit 152 and serves the role as a reader and writer (or an interrogator) in NFC or the like. The communication unit 102 may further include, for example, an encryption circuit (not illustrated) or a communication collision avoidance (anti-collision) circuit.

The high-frequency signal generation unit 150 receives, for example, a high-frequency signal generation command delivered from the control unit 104 and generates the high-frequency signal according to the high-frequency signal generation command. The high-frequency signal generation unit 150 receives, for example, a high-frequency signal transmission stop command delivered from the control unit 104 and indicating transmission stop of the high-frequency signal and stops generating the high-frequency signal. Here, in FIG. 2, an alternating-current power supply is illustrated as the high-frequency signal generation unit 150, but the high-frequency signal generation unit 150 according to the embodiment is not limited thereto. For example, the high-frequency signal generation unit 150 according to the embodiment can include a modulation circuit (not illustrated) that performs amplitude-shift keying (ASK) modulation and an amplification circuit (not illustrated) that amplifies an output of the modulation circuit.

Here, a signal which includes various types of commands or various types of information relating to the above described process relating to the management method, such as "a signal which includes a transmission command for transmitting information related to the battery cell according to the embodiment (an example of a signal for transmitting information related to the battery cell)", "a signal which includes log information according to the embodiment, and a recording command for recording the log information in a recording medium" or the like can be included, for example, as the high-frequency signal generated by the high-frequency signal generation unit 150. The high-frequency signal generated by the high-frequency signal generation unit 150 may be, for example, an unmodulated signal.

The demodulation unit 152 demodulates the signal transmitted from the communication apparatus 200 through the load modulation, for example, by performing envelope detection on an amplitude change of a voltage between the high-frequency signal generation unit 150 and the filter 500 and binarizing the detected signal. The demodulation unit 152 delivers the demodulated transmission signal to the control unit 104. Further, the demodulation means for the signal transmitted from the communication apparatus 200 in the demodulation unit 152 is not limited thereto. For example, the demodulation unit 152 can also demodulate the signal transmitted from the communication apparatus 200 using a phase change of a voltage between the high-frequency signal generation unit 150 and the filter 500.

Here, a signal corresponding to a signal transmitted from the communication unit 102 (a signal corresponding to the high-frequency signal generated by the high-frequency signal generation unit 150) can be included, for example, as the signal transmitted from the communication apparatus 200 according to the embodiment. For example, in the case where the signal transmitted from the communication unit 102 is "a signal which includes a transmission command for transmitting information related to the battery cell according to the embodiment", information related to the battery cell according to the embodiment is included in the signal transmitted from the communication apparatus 200 according to the embodiment. Further, for example, in the case where the signal transmitted from the communication unit 102 is "a signal which includes log information according to the embodiment, and a recording command for recording the log information in a recording medium", a response signal which shows a processing result of the process relating to the recording of the log information in the communication apparatus 200 is included in the signal transmitted from the communication apparatus 200 according to the embodiment.

The communication unit 102 according to the embodiment can serve the role as a reader and writer in NFC or the like and serve the role of communicating with the communication apparatus 200 via the power line PL, for example, in the configuration illustrated in FIG. 2.

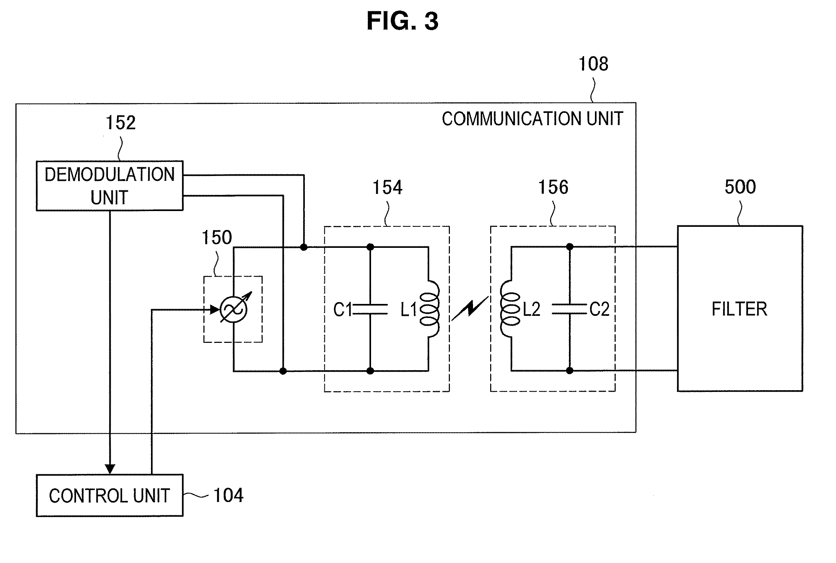

The configuration of the communication unit 102 according to the embodiment is not limited to the configuration illustrated in FIG. 2. FIG. 3 is an explanatory diagram illustrating another example of the configuration of the communication unit 102 included in the management apparatus 100 according to the embodiment. Here, as in FIG. 2, the control unit 104 and the filter 500 are illustrated together in FIG. 3.

The communication unit 102 according to the other example includes the high-frequency signal generation unit 150, the demodulation unit 152, a first high-frequency transmission and reception unit 154, and a second high-frequency transmission and reception unit 156. The communication unit 102 according to the other example may further include, for example, an encryption circuit (not illustrated) or a communication collision avoidance (anti-collision) circuit.

As in the high-frequency signal generation unit 150 illustrated in FIG. 2, the high-frequency signal generation unit 150 generates a high-frequency signal according to a high-frequency signal generation command and stops generating the high-frequency signal according to a high-frequency signal transmission stop command.

The demodulation unit 152 demodulates the transmission signal transmitted from the communication apparatus 200 by performing envelope detection on an amplitude change of a voltage at an antenna end of the first high-frequency transmission and reception unit 154 and binarizing the detected signal. Further, the modulation means for the signal transmitted from the communication apparatus 200 in the demodulation unit 152 is not limited thereto. For example, the demodulation unit 152 can also demodulate the transmission signal using a phase change of a voltage of an antenna end of the first high-frequency transmission and reception unit 154.

The first high-frequency transmission and reception unit 154 includes an inductor L1 having predetermined inductance and a capacitor C1 having predetermined electrostatic capacitance to form a resonant circuit. Here, an example of a resonant frequency of the first high-frequency transmission and reception unit 156 includes a frequency of a high-frequency signal such as 13.56 [MHz]. In the foregoing configuration, the first high-frequency transmission and reception unit 154 can transmit the high-frequency signal generated by the high-frequency signal generation unit 150 and receive the signal transmitted from the second high-frequency transmission and reception unit 156 or transmitted from the communication apparatus 200. That is, the first high-frequency transmission and reception unit 154 serves the role as a first communication antenna inside the communication unit 102.

The second high-frequency transmission and reception unit 156 includes an inductor L2 having predetermined inductance and a capacitor C2 having predetermined electrostatic capacitance to form a resonant circuit. Here, an example of a resonant frequency of the second high-frequency transmission and reception unit 156 includes a frequency of a high-frequency signal such as 13.56 [MHz]. In the foregoing configuration, the second high-frequency transmission and reception unit 156 can receive the high-frequency signal transmitted from the first high-frequency transmission and reception unit 154 and transmit the signal transmitted from the communication apparatus 200. That is, the second high-frequency transmission and reception unit 156 serves the role as a second communication antenna inside the communication unit 102.

As in the configuration illustrated in FIG. 2, in the configuration illustrated in FIG. 3, the communication unit 102 according to the embodiment can also serve the role as a reader and writer in NFC or the like and serve the role of communicating with the communication apparatus 200 via the power line PL, for example, in the configuration illustrated in FIG. 3.

The configuration of the communication unit 102 according to the embodiment is not limited to the configuration illustrated in FIG. 2 or 3. For example, when the power line communication such as PLC is performed between the communication unit 102 and the communication apparatus 200, the communication unit 102 may be configured as, for example, a device related to the power line communication such as a PLC modem.

Referring again to FIG. 1, an example of the configuration of the management apparatus 100 will be described. The control unit 104 is configured to include a micro processing unit (MPU) or various processing circuits and serves the role of controlling the entire management apparatus 100. The control unit 104 includes, for example, a processing unit 110 and serves the role mainly to perform a process related to the management method according to the embodiment.

The processing unit 110 serves the role of initiatively performing the management process according to the embodiment, and performs a process related to the management of the battery cell, based on information related to the battery cell acquired from the communication apparatus 200.

More specifically, for example, the processing unit 110 performs a process according to a detection result of the sensor shown by the sensor information included in the acquired information related to the battery cell, such as illustrated in the management process relating to the first example illustrated in the above described (1) to the management process relating to the sixth example illustrated in the above described (6). Further, for example, the processing unit 110 may perform the management process relating to the seventh example illustrated in the above described (7) or the management process relating to the eighth example illustrated in the above described (8).

The control unit 104 initiatively performs a process relating to the management method according to the embodiment, for example, by including the processing unit 110.

The management apparatus 100 performs a process (for example, the above described management process) relating to the management method according to the embodiment, for example, by the configuration illustrated in FIG. 1.

Therefore, the management apparatus 100 can manage the battery cell, based on a detected state of the battery cell, for example, by the configuration illustrated in FIG. 1.

Note that, the configuration of the management apparatus according to the embodiment is not limited to the configuration illustrated in FIG. 1.

For example, the management apparatus according to the embodiment may include the filter 500, which will be described below.

Further, for example, in the case where the management apparatus according to the embodiment performs communication with the communication apparatus 200, via an external communication device having functions and a configuration the same as those of the communication unit 102, the management apparatus according to the embodiment may not include the communication unit 102.

### [1-2] Communication apparatus 200

The communication apparatus 200 includes, for example, a communication unit 202. In FIG. 1, the communication unit 202 is connected to a positive electrode side power line and a negative electrode side power line of the battery cell 300, for example, via the filter 600.

The communication unit 202 performs communication via the power line PL with an external apparatus such as the management apparatus 100, for example, by the high-frequency signal.

More specifically, for example, when the high-frequency signal transmitted from the external apparatus is received, the communication unit 202 obtains the power from the high-frequency signal to be driven and performs a process based on the received high-frequency signal. Then, the communication unit 202 transmits the signal according to the process as the high-frequency signal through the load modulation.

Further, for example, the communication unit 202 supplies power obtained from the high-frequency signal to the sensor 400 (the sensor which detects a state of the battery cell 300). Also, the communication unit 202 acquires sensor information from the sensor 400 driven by the supplied power.

For example, in the case where a high-frequency signal including "a signal which includes a transmission command for transmitting information related to the battery cell according to the embodiment" has been received, the communication unit 202 transmits, superimposed on the power line PL by the load modulation, information related to the battery cell corresponding to this transmission command. Here, sensor information, acquired from the sensor 400 driven by power obtained from the high-frequency signal supplied by the communication unit 202, is included, for example, in the information related to the battery cell transmitted by the communication unit 202.

Further, for example, in the case where a high-frequency signal including "a signal which includes log information according to the embodiment, and a recording command for recording the log information in a recording medium" has been received, the communication unit 202 records the received log information in a recording medium corresponding to the battery cell according to the embodiment, based on the received recording command. Also, the communication unit 202 transmits, superimposed on the power line PL by the load modulation, a response signal showing a processing result of the process relating to the recording of the log information. That is, for example, the communication unit 202 serves the role as a responder in NFC or the like.

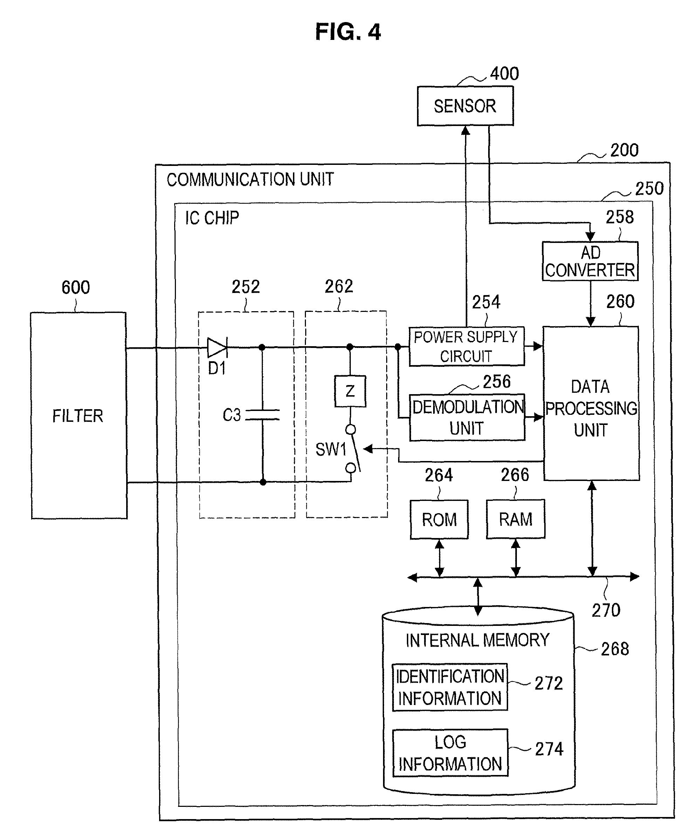

FIG. 4 is an explanatory diagram illustrating an example of the configuration of the communication unit 202 included in the communication apparatus 200 according to the embodiment. Here, the sensor 400 and the filter 600 are also illustrated in FIG. 4. A configuration in which the communication unit 202 includes an IC chip 250 that demodulates the received high-frequency signal and transmits the transmission signal through the load modulation is illustrated in FIG. 4. The communication unit 202 according to the embodiment may not include each constituent element included in the IC chip 250 illustrated in FIG. 4 in the form of an IC chip.

The IC chip 250 includes, for example, a wave detection unit 252, a power supply circuit 254, a demodulation unit 256, an AD converter 258, and a data processing unit 260, and a load modulation unit 262. Although not illustrated in FIG. 4, the IC chip 250 may further include, for example, a protection circuit (not illustrated) that prevents an overvoltage or an overcurrent from being applied to the data processing unit 260. Here, an example of the protection circuit (not illustrated) includes a clamp circuit formed by a diode and the like.

The IC chip 250 includes, for example, a ROM 264, a RAM 266, and an internal memory 268. The data processing unit 260, the ROM 264, the RAM 266, and the internal memory 268 are connected to each other by, for example, a bus 270 serving as a data transmission path.

The wave detection unit 252 rectifies the high-frequency signal delivered from the filter 600. Here, the wave detection unit 252 is configured to include, for example, a diode D1 and a capacitor C3.

The power supply circuit 254 includes a regulator or the like, for example, and smoothes-out the high-frequency signal, fixes the voltage, and outputs a drive voltage to the data processing unit 260. Further, the power supply circuit 254 supplies power obtained from the high-frequency signal to the sensor 400, for example, by outputting the drive voltage to the sensor 400. Here, for example, the power supply circuit 254 uses a direct-current component of the high-frequency signal as the drive voltage.

The demodulation unit 256 demodulates the high-frequency signal and outputs data corresponding to the high-frequency signal (for example, a data signal binarized with high and low levels). Here, the demodulation unit 256 outputs, for example, an alternating-current component of the high-frequency signal as data.

The AD converter 258 includes an Analog-to-Digital converter (AD converter), for example, and converts an analog signal according to a detection result delivered from the sensor 400 into a digital signal. Here, a digital signal which the AD converter 258 has converted from an analog signal according to a detection result delivered from the sensor 400 corresponds to sensor information (data) according to the embodiment.

Also, the AD converter 258 delivers the sensor information delivered from the sensor 400 (a digital signal to which an analog signal according to a detection result has been converted) to the data processing unit 260.

For example, the data processing unit 260 is driven using the driving voltage output from the power supply circuit 254 as a power supply and processes the data demodulated by the demodulation unit 256. Here, the data processing unit 260 is configured to include, for example, an MPU or various processing circuits.

The data processing unit 260 selectively generates a control signal controlling the load modulation related to a response to the external apparatus according to a processing result. Then, the data processing unit 260 selectively outputs the control signal to the load modulation unit 262.

For example, in the case where a transmission command for transmitting information related to the battery cell according to the embodiment is included in the demodulated data, the data processing unit 260 delivers a control signal for transmitting a signal which includes information related to the battery cell corresponding to this transmission command, such as information related to the battery cell which includes sensor information corresponding to this transmission command, to the load modulation unit 262.

Further, for example, in the case where log information according to the embodiment, and a recording command for recording the log information in a recording medium, are included in the demodulated data, the data processing unit 260 records the received log information in the internal memory 268 (an example of a recording medium corresponding to the battery cell according to the embodiment), based on the received recording command. Also, the data processing unit 260 delivers a control signal for transmitting a signal, which shows a processing result of the process relating to the recording of log information, to the load modulation unit 262.

For example, the data processing unit 260 reads data stored in the internal memory 268 for updating or the like based on a command included in the data demodulated by the demodulation unit 256.

The load modulation unit 262 includes, for example, a load Z and a switch SW1 and performs the load modulation by selectively connecting (validating) the load Z according to the control signal delivered from the data processing unit 260. Here, the load Z is configured as, for example, a resistor with a predetermined resistance value, but the load z is not limited thereto. The switch SW1 is configured as, for example, a p-channel type metal oxide semiconductor field effect transistor (MOSFET) or an n-channel type MOSFET, but the switch SW1 is not limited thereto.

The ROM 264 stores a program used by the data processing unit 260 or control data such as an arithmetic parameter. The RAM 266 temporarily stores a program executed by the data processing unit 260, an arithmetic result, an execution state, and the like.

The internal memory 268 is a storage means included in the IC chip 250 and has, for example, a tamper resistant property. For example, the data processing unit 260 reads data, newly records data, and updates data. For example, various kinds of data such as identification information, log information, or applications are stored in the internal memory 268. Here, an example in which the internal memory 268 stores identification information 272 and the log information 274 is illustrated in FIG. 4, but the data stored in the internal memory 268 is not limited thereto. For example, the internal memory 268 may store the sensor information.

For example, in the foregoing configuration illustrated in FIG. 4, the IC chip 250 processes the high-frequency signal delivered through the filter 600 and superimposes the signal corresponding to the processing result of the received high-frequency signal on the power line PL to transmit the signal through the load modulation via the filter 600. It is needless to say that the configuration of the IC chip 250 according to the embodiment is not limited to the configuration illustrated in FIG. 4.

The communication unit 202 performs the process shown by the high-frequency signal received by obtaining power from the received high-frequency signal to be driven, by the configuration illustrated in FIG. 4, for example, and transmits a signal corresponding to a processing result of the received high-frequency signal. Further, the communication unit 202 supplies the power obtained from the high-frequency signal to the sensor 400, for example, by the configuration illustrated in FIG. 4.

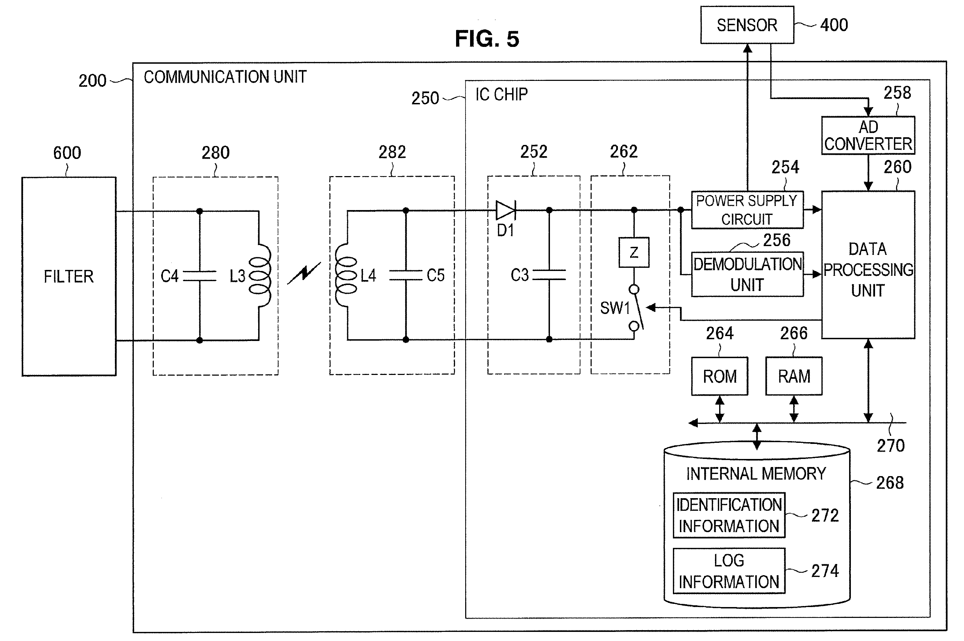

The configuration of the communication unit 202 according to the embodiment is not limited to the configuration illustrated in FIG. 4. FIG. 5 is an explanatory diagram illustrating another example of the configuration of the communication unit 202 included in the communication apparatus 200 according to the embodiment. Here, the sensor 400 and the filter 600 are also illustrated in FIG. 5. The communication unit 202 according to the embodiment may not include each constituent element included in the IC chip 250 illustrated in FIG. 5 in the form of an IC chip.

The communication unit 202 according to the other example includes a first high-frequency transmission and reception unit 280, a second high-frequency transmission and reception unit 282, and an IC chip 250.

The first high-frequency transmission and reception unit 280 includes an inductor L3 having predetermined inductance and a capacitor C4 having predetermined electrostatic capacitance to form a resonant circuit. Here, an example of a resonant frequency of the first high-frequency transmission and reception unit 280 includes a frequency of a high-frequency signal such as 13.56 [MHz]. In the foregoing configuration, the first high-frequency transmission and reception unit 280 can transmit the high-frequency signal delivered from the filter 600 and receive the transmission signal transmitted from the second high-frequency transmission and reception unit 282. That is, the first high-frequency transmission and reception unit 280 serves the role as a first communication antenna inside the communication unit 202.

The second high-frequency transmission and reception unit 282 includes an inductor L4 having predetermined inductance and a capacitor C5 having predetermined electrostatic capacitance to form a resonant circuit. Here, an example of a resonant frequency of the second high-frequency transmission and reception unit 282 includes a frequency of a high-frequency signal such as 13.56 [MHz]. In the foregoing configuration, the second high-frequency transmission and reception unit 282 can receive the high-frequency signal transmitted from the first high-frequency transmission and reception unit 280 and transmit the signal delivered from the IC chip 250. More specifically, the second high-frequency transmission and reception unit 282 causes an induced voltage to be generated through electromagnetic induction in response to the reception of the high-frequency signal and outputs a reception voltage obtained by resonating the induced voltage at a predetermined resonance frequency to the IC chip 250. The second high-frequency transmission and reception unit 282 transmits the signal according to the load modulation performed in the load modulation unit 262 included in the IC chip 250. That is, the second high-frequency transmission and reception unit 282 serves the role as a second communication antenna inside the communication unit 202.

The IC chip 250 performs the same process as the IC chip 250 illustrated in FIG. 4 based on the reception voltage delivered from the second high-frequency transmission and reception unit 282.

The communication unit 202 performs the process shown by the high-frequency signal received by obtaining power from the received high-frequency signal to be driven, by the configuration illustrated in FIG. 5, similar to the configuration illustrated in FIG. 4, and transmits a signal corresponding to a processing result of the received high-frequency signal, by the load modulation. Further, the communication unit 202 supplies the power obtained from the high-frequency signal to the sensor 400, by the configuration illustrated in FIG. 5, similar to the configuration illustrated in FIG. 4.

When the communication unit 202 has the configuration illustrated in FIG. 5, for example, the IC chip related to NFC or RFID can be reused, and thus there is the advantage that mounting is easier.

The configuration of the communication unit 202 according to the embodiment is not limited to the configuration illustrated in FIG. 4 or 5. For example, when the power line communication such as PLC is performed between the external apparatus such as the management apparatus 100 and the communication unit 202, the communication unit 202 may be configured as, for example, a device related to the power line communication such as a PLC modem.

The communication apparatus 200 performs a process shown by the high-frequency signal received by obtaining power from the high-frequency signal to be driven transmitted from the management apparatus 100 (an example of an external apparatus) via the power line PL, for example, by the configuration illustrated in FIG. 1, and transmits information related to the battery cell to the management apparatus 100 by the load modulation via the power line PL. Further, the communication apparatus 200 supplies power obtained from the high-frequency signal to the sensor 400, for example, by the configuration illustrated in FIG. 1, and acquires sensor information from the sensor 400 driven by the supplied power.

Therefore, by the communication apparatus 200 having the configuration illustrated in FIG. 1, for example, the management apparatus 100 constituting the management system 1000 can perform a process (for example, the above described management process) relating to the management method according to the embodiment. Therefore, by the communication apparatus 200 having the functions illustrated in FIG. 1, for example, a management system is implemented, capable of managing the battery cell, based on a detected state of the battery cell.

Note that, the configuration of the communication apparatus according to the embodiment is not limited to the configuration illustrated in FIG. 1.

For example, the communication apparatus according to the embodiment may further include the battery cell 300 illustrated in FIG. 1. Further, for example, the communication apparatus according to the embodiment may further include the sensor 400. Further, for example, it is possible for the communication apparatus according to the embodiment to take a configuration which further includes the filter 600. That is, in the management system 1000 illustrated in FIG. 1, for example, the entire battery apparatus 700 may be a communication apparatus according to the embodiment, or a part of the battery apparatus 700 may be a communication apparatus according to the embodiment.

### [1-3] Battery cell 300

The battery cell 300 is electrically connected to the power line PL. The battery cell 300 supplies power to a device (not illustrated) or the like electrically connected to the power line PL, for example, via the power line PL. Further, the battery cell 300 accumulates a charge according to power supplied from a device (not illustrated) electrically connected to the power line PL, for example, via the power line PL.

Here, a secondary battery such as a lithium-ion secondary battery or a lithium-ion-polymer secondary battery can be included, for example, as the battery 300. Note that, the battery 300 according to the embodiment is not limited to that described above. For example, the battery 300 may be a primary battery or the like such as a dry cell battery or a lithium battery.

### [Sensor 400]

The sensor 400 detects a state of the battery cell 300. Further, for example, the sensor 400 is driven by power supplied from the communication apparatus 200 and obtained from a high-frequency signal received by the communication apparatus 200. Also, for example, the sensor 400 transmits an analog signal according to a detection result to the communication apparatus 200.

Here, in FIG. 1, a configuration is illustrated in which the management system 1000 has, as the sensor 400, the temperature sensor 400A of an arbitrary configuration capable of detecting a temperature of the battery cell, the voltage sensor 400B of an arbitrary configuration capable of detecting a voltage of the battery cell, and the current sensor 400C of an arbitrary configuration capable of detecting a current of the battery cell. Note that, the sensor 400 of the management system according to the embodiment is not limited to the example illustrated in FIG. 1. For example, it is possible for the management system according to the embodiment to include one or two or more sensors, capable of detecting the state of the battery cell 300.

### [Filter 500]

The filter 500 is connected between the power line PL and the communication unit 102, and serves the role of filtering signals delivered from the power line PL. More specifically, the filter 500 has a function of cutting off at least a signal with a frequency of the power and not cutting off the high-frequency signal, from among signals delivered from the power line PL.

In the management system 1000, a signal with the frequency of power which may be noise is not delivered to the communication unit 102, for example, by having the filter 500 installed. Therefore, by having the filter 500 installed, the accuracy of communication between the communication unit 102 and the communication apparatus 200 (more specifically, in the example illustrated in FIG. 1, for example, the communication unit 202 included in the communication apparatus 200) can be improved.

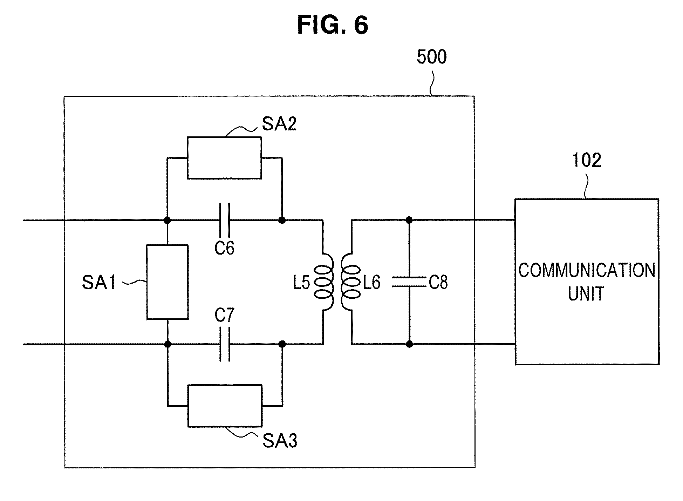

FIG. 6 is an explanatory diagram illustrating an example of the configuration of the filter 500 according to the embodiment. Here, the communication unit 102 included in the management apparatus 100 is also illustrated in FIG. 6.

The filter 500 is configured to include, for example, inductors L6 and L6, capacitors C6 to C8, and surge suppressors SA1 to SA3. It is needless to say that the configuration of the filter 500 according to the embodiment is not limited to the configuration illustrated in FIG. 6.

### [Filter 600]

The filter 600 is connected between the power line PL and the communication apparatus 200 (more specifically, the communication unit 202 included in the communication apparatus 200) and serves the role of filtering a signal delivered from the power line PL. More specifically, the filter 600 has a function of cutting off at least a signal with a frequency of the power and not cutting off the high-frequency signal, from among signals delivered from the power line PL.

In the management system 1000, the communication apparatus 200 communicates with the external apparatus such as the management apparatus 100 via the filter 600, so that a signal with the frequency of the power which may be noise is not delivered to the communication apparatus 200. Accordingly, in the management system 1000, accuracy of the communication between the communication apparatus 200 and the communication apparatus 200 (more specifically, for example, the communication unit 202 included in the communication apparatus 200) is improved.

Here, for example, the filter 600 has the same configuration as the filter 500 illustrated in FIG. 6. It is needless to say that the configuration of the filter 600 according to the embodiment is not limited to the same configuration as the filter 500 illustrated in FIG. 6.

The management system 1000 according to the first embodiment has, for example, the configuration illustrated in FIG. 1. In the management system 1000, the management apparatus 100 performs a process related to the management of the battery cell, based on information related to the battery cell acquired from the communication apparatus 200, via the power line PL. More specifically, for example, the management apparatus 100 performs a process according to a detection result of the sensor 400 shown by the sensor information included in the acquired information related to the battery cell, such as illustrated in the management process relating to the first example illustrated in the above described (1) to the management process relating to the sixth example illustrated in the above described (6).

Here, the sensor information according to the embodiment shows a detection result detected by the sensor 400 which detects a state of the battery cell 300. That is, for example, in the case where the management apparatus according to the embodiment performs a process according to a detection result of the sensor shown by the acquired sensor information, such as illustrated in the management process relating to the first example illustrated in the above described (1) to the management process relating to the sixth example illustrated in the above described (6), the management apparatus according to the embodiment performs a process based on a detected state of the battery cell 300.

Therefore, a management system is implemented, capable of managing the battery cell 300, based on a detected state of the battery cell 300, for example, by the configuration illustrated in FIG. 1.

Further, in the management system 1000, communication is performed between the management apparatus 100 and the communication apparatus 200, via the power line PL, by communication via a power line according to the embodiment.

Here, a method in which the management apparatus 100 performs communication between the management apparatus 100 and the sensor 400, by a wired connection between the sensor 400 (or the communication apparatus 200 connected to the sensor 400) and the management apparatus 100 by a harness or the like, can be considered, for example, as another method which acquires sensor information showing a detection result in the sensor 400.

However, in the case where the above described other method which acquires sensor information is used, wiring for communication may become additionally necessary. Therefore, in the case where the above described other method which acquires sensor information is used, for example, more wiring may become necessary, to the extent that the number of battery cells included in the battery apparatus according to the embodiment increases (illustrated by the management system according to the third embodiment, which will be described below, and the management system according to the fourth embodiment, which will be described below, for a management system having a plurality of battery cells). Therefore, in the case where the above described other method which acquires sensor information is used, for example, undesirable phenomena may occur, such as "the assembly of the battery apparatus according to the embodiment becomes complicated", "the weight of the battery apparatus according to the embodiment increases", or "the cost of the battery apparatus according to the embodiment increases".

Further, in order for the management apparatus 100 to acquire sensor information showing a detection result in the sensor 400, a method in which the management apparatus 100 performs wireless communication with the sensor 400 (or the communication apparatus 200 connected to the sensor 400) can be considered, for example, as another additional method.

However, in the case where the above described other additional method for acquiring sensor information is used, for example, the battery apparatus according to the embodiment will not be able to perform communication at the time when surrounded by metal which obstructs wireless communication, and so the management apparatus 100 will not be able to acquire information related to the battery which includes sensor information. Therefore, in the case where the above described other additional method for acquiring sensor information is used, for example, undesirable phenomena may occur, such as "the management apparatus 100 is not able to perform a process relating to the management method according to the embodiment".

In contrast to this, in the management system 1000, since communication is performed between the management apparatus 100 and the communication apparatus 200, via the power line PL, by communication via a power line according to the embodiment, the generation of undesirable phenomena is prevented, such as in the case where the above described other method which acquires sensor information or the above described other additional method for acquiring sensor information is used.

Further, in the case where power line communication using wireless communication technology such as communication technology by NFC or an RFID technology is performed as communication via a power line according to the embodiment, it is possible for the communication apparatus 200 to be driven by using power obtained from a received high-frequency signal. Therefore, in the case where power line communication using wireless communication technology such as communication technology by NFC or an RFID technology is performed as communication via a power line according to the embodiment, it may not be necessary to use power accumulated in the battery cell 300, for the driving of the communication apparatus 200.

Further, in the management system 1000, the sensor 400 is driven, for example, by power supplied from the communication apparatus 200 and obtained from a high-frequency signal received by the communication apparatus 200. Also, for example, the sensor 400 transmits an analog signal according to a detection result to the communication apparatus 200.

Here, a method which performs driving by obtaining power from the battery cell 300 can be considered, for example, as another method for driving the sensor 400.

However, in the case where the above described other method for driving the sensor 400 is used, power accumulated in the battery cell 300 is used, and so there is the possibility of influencing the state of the battery cell 300 which is the object to be measured by the sensor 400.

Further, in the case where the above described other method for driving the sensor 400 is used, for example, there is the possibility that the voltage balance of the battery cells included in the battery apparatus according to the embodiment will be lost, to the extent that the number of battery cells included in the battery apparatus according to the embodiment increases, by a variation of the consumption power of the sensor 400 which detects a state of each battery cell or the like. Here, in the case where the voltage balance of the battery cell included in the battery apparatus according to the embodiment is lost, for example, undesirable phenomena may occur, such as "efficient operation of the battery apparatus according to the embodiment is disturbed".

Further, in the case where the above described other method for driving the sensor 400 is used, for example, in the case where the environment in which the battery apparatus according to the embodiment is used is a low-temperature environment, undesirable phenomena may occur, such as the sensor 400 not being able to operate, by the voltage of the battery cell 300 being reduced.

In contrast to this, in the management system 1000, for example, since the sensor 400 is driven by power supplied from the communication apparatus 200 and obtained from a high-frequency signal received by the communication apparatus 200, undesirable phenomena is prevented, such as in the case where the above described other method for driving the sensor 400 is used.

Note that, even in the case where the communication apparatus 200 is driven by obtaining power from the battery cell 300, undesirable phenomena may occur, similar to the case where the above described other method for driving the sensor 400 is used. However, in the case where power line communication using wireless communication technology such as communication technology by NFC or an RFID technology is performed as communication via a power line according to the embodiment, undesirable phenomena is prevented, such as in the case where the above described other method for driving the sensor 400 is used.

Further, for example, by having the sensor 400 driven by power supplied from the communication apparatus 200 and obtained from a high-frequency signal received by the communication apparatus 200, in the management system 1000, it may not be necessary to install a power supply for driving the sensor 400 at the location where the sensor 400 is installed. Therefore, in the management system 1000, detection and management of the state of the battery cell 300 can be performed, without influencing the battery cell 300 which is the object to be measured, and without depending on the state of the battery cell 300. Therefore, for example, by using the management system 1000, a more superior sensor network can be constructed, for example, in which accurate installation is easy, via a power line network.

### <Modified example of the management system according to the first embodiment>

Note that, the configuration of the management system according to the first embodiment is not limited to the configuration illustrated in FIG. 1.

For example, it is possible for the management system according to the first embodiment to take a configuration which does not include one or two of the sensors from among the temperature sensor 400A, the voltage sensor 400B and the current sensor 400C illustrated in FIG. 1. Further, the management system according to the first embodiment may further include, for example, other sensors capable of detecting the state of the battery cell 300.

Further, it is possible for the management system according to the first embodiment to take a configuration which does not include one or both of the filter 500 and the filter 600 illustrated in FIG. 1.

Further, the battery apparatus 700 of the management system according to the first embodiment may further include, for example, a recording medium corresponding to the battery cell 300. A non-volatile memory such as a flash memory or the like can be included, for example, as a recording medium corresponding to the battery cell 300. In the case where the battery apparatus 700 of the management system according to the first embodiment further includes a recording medium corresponding to the battery cell 300, for example, the communication apparatus 200 records log information or the like in this recording medium corresponding to the battery cell 300.

Further, the battery apparatus 700 of the management system according to the first embodiment may further include, for example, a protection circuit for protecting the battery cell 300, and a control circuit which controls the charging and discharging of the battery cell 300.

### [2] Configuration example of the management system according to a second embodiment

Note that, the configuration of the management system according to the embodiment is not limited to the configuration according to the first embodiment such as illustrated in FIG. 1.

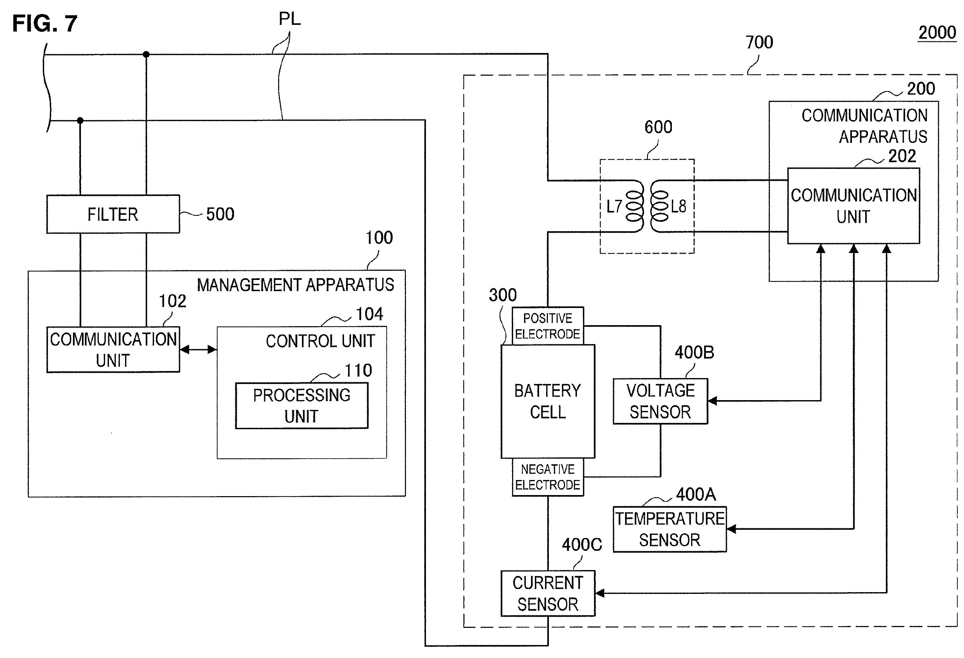

FIG. 7 is an explanatory diagram illustrating an example of the configuration of a management system 2000 according to a second embodiment. The management system 2000 has, for example, a management apparatus 100, a communication apparatus 200, a battery cell 300, a temperature sensor 400A, a voltage sensor 400B, a current sensor 400C, a filter 500, and a filter 600. Here, in FIG. 7, for example, the communication apparatus 200, the battery cell 300, the sensor 400 and the filter 600 correspond to a battery apparatus 700.

When comparing the configuration of the management system 2000 illustrated in FIG. 7 and the configuration of the management system 1000 illustrated in FIG. 1, the connection relationship between the communication apparatus 200 (more specifically, the communication unit 202 included in the communication apparatus 200) and the power line is different. Specifically, in the management system 1000, the communication unit 202 included in the communication apparatus 200 is electrically connected to the positive electrode side power line and the negative electrode side power line of the battery cell 300, while in contrast, in the management system 2000, the communication unit 202 included in the communication apparatus 200 is electrically connected to the positive electrode side power line of the battery cell 300.

Further, the filter 600 constituting the management system 2000 is configured to include, for example, an inductor L7 and an inductor L8. Note that, the filter 600 constituting the management system 2000 may have a configuration the same as that of the filter 600 illustrated in FIG. 1.

For example, it is possible for the management apparatus 100 and the communication apparatus 200 constituting the management system 2000 to perform communication via a power line, by communication via a power line according to the embodiment, by the configuration illustrated in FIG. 7. Further, each of the constituent elements constituting the management system 2000 has, for example, a configuration and function the same as each of the constituent elements constituting the management system 1000 illustrated in FIG. 1.

Therefore, the management system 2000 illustrated in FIG. 7 can accomplish an effect the same as that of the management system 1000 according to the first embodiment illustrated in FIG. 1.

### <Modified example of the management system according to the second embodiment>

Note that, the configuration of the management system according to the second embodiment is not limited to the configuration illustrated in FIG. 7.

For example, the communication unit 202 included in the communication apparatus 200 constituting the management system according to the second embodiment may be electrically connected to the negative electrode side power line of the battery cell 300.

It is possible for the management apparatus 100 and the communication apparatus 200 constituting the management system according to a modified example of the second embodiment to perform communication via a power line, by communication via a power line according to the embodiment, by the configuration according to a modified example of the second embodiment. Further, each of the constituent elements constituting the management system according to the modified example of the second embodiment has, for example, a configuration and function the same as each of the constituent elements constituting the management system 1000 illustrated in FIG. 1.

Therefore, the management system according to the modified example of the second embodiment can accomplish an effect the same as that of the management system 1000 according to the first embodiment illustrated in FIG. 1.

Further, it is possible for the management system according to the second embodiment to take a configuration the same as that of the above described management system according to the modified example of the first embodiment.

### [3] Configuration example of the management system according to a third embodiment

In the above described management system according to the first embodiment and the above described management system according to the second example, a configuration has been illustrated in which the management system according to the embodiment has one battery cell 300. However, the configuration of the management system according to the embodiment is not limited to a configuration which has one battery cell 300, and may be a configuration which has a plurality of battery cells 300.

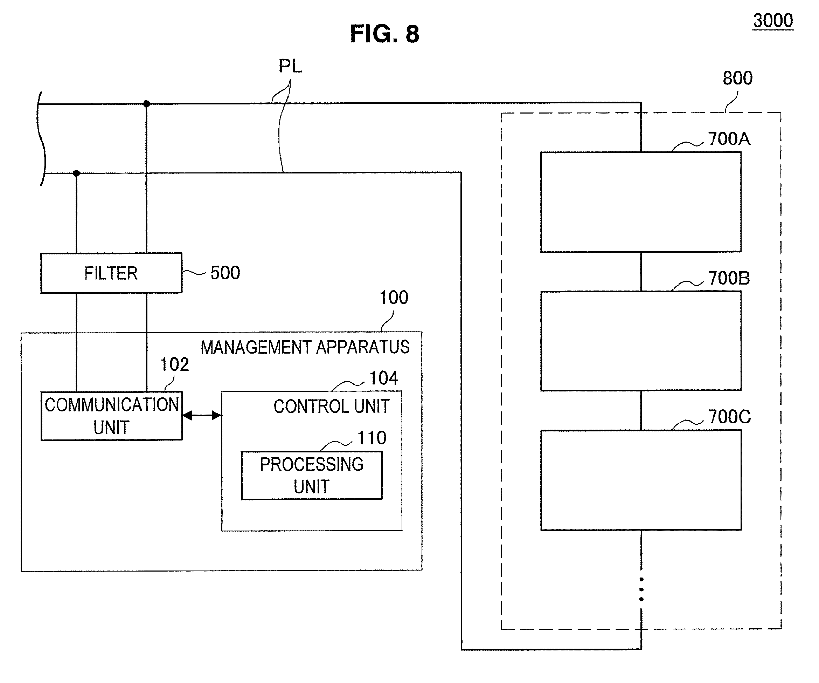

FIG. 8 is an explanatory diagram illustrating an example of the configuration of a management system 3000 according to a third embodiment, and illustrates an example of a management system which has a plurality of battery cells 300.

The management system 3000 has, for example, a management apparatus 100, a filter 500, and a battery pack 800. The battery pack 800 is configured to include a battery apparatus 700A, a battery apparatus 700B, a battery apparatus 700C, ..., and the battery apparatus 700A, the battery apparatus 700B, the battery apparatus 700C, ..., are connected in series to a power line PL. Here, it is possible for the battery pack 800 to be recognized as the battery apparatus according to the embodiment.

Each of the battery apparatus 700A, the battery apparatus 700B, the battery apparatus 700C, ..., has, for example, a configuration the same as the battery apparatus 700 according to the first embodiment (also including the configuration according to the modified example of the first embodiment) or the battery apparatus 700 according to the second embodiment (also including the modified example according to the second embodiment). That is, the battery pack 800 illustrated in FIG. 8 has a plurality of battery cells 300, connected in series to a power line PL.

The management apparatus 100, and communication apparatuses 200 constituting each of the battery apparatus 700A, the battery apparatus 700B, the battery apparatus 700C, ..., can perform communication via the power line PL, by communication via a power line according to the embodiment, for example, by the configuration illustrated in FIG. 8. Further, for example, in the case where the communication apparatuses 200 include a communication collision avoidance (anti-collision) circuit, it is possible for each of the plurality of communication apparatuses 200 included in the battery pack 800 to perform steadier communication with the management apparatus 100.

Further, the management apparatus 100, and each of the constituent elements of the battery apparatus 700A, the battery apparatus 700B, the battery apparatus 700C, ..., constituting the management system 3000 has a configuration and function, for example, the same as each of the constituent elements constituting the management system 1000 illustrated in FIG. 1, or each of the constituent elements constituting the management system 2000 illustrated in FIG. 7.

Therefore, the management system 3000 illustrated in FIG. 8 can accomplish an effect the same as that of the management system 1000 according to the first embodiment illustrated in FIG. 1.

### <Modified example of the management system according to the third embodiment>

It is possible for the management system according to the third embodiment to take, for example, a configuration the same as that of the above described management system according to the modified example of the first embodiment or the above described management system according to the modified example of the second embodiment.

Further, in the case where the management system according to the third embodiment includes the current sensor 400C as the sensor 400, for example, each of the battery apparatus 700A, the battery apparatus 700B, the battery apparatus 700C, ..., may include the current sensor 400C, or it may be a configuration which has one current sensor 400C corresponding to the battery pack 800. In the case where the management system according to the third embodiment is a configuration which has one current sensor 400C corresponding to the battery pack 800, for example, the current sensor 400C is installed on the negative electrode side power line of the final stage battery cell from among the battery cells 300 connected in series.

### [4] Configuration example of the management system according to a fourth embodiment

The configuration of the management system according to the embodiment which has a plurality of battery cells 300 is not limited, for example, to the configuration of the management system 3000 according to the third embodiment illustrated in FIG. 8 (also including the configuration of the management system according to the modified example of the third embodiment).

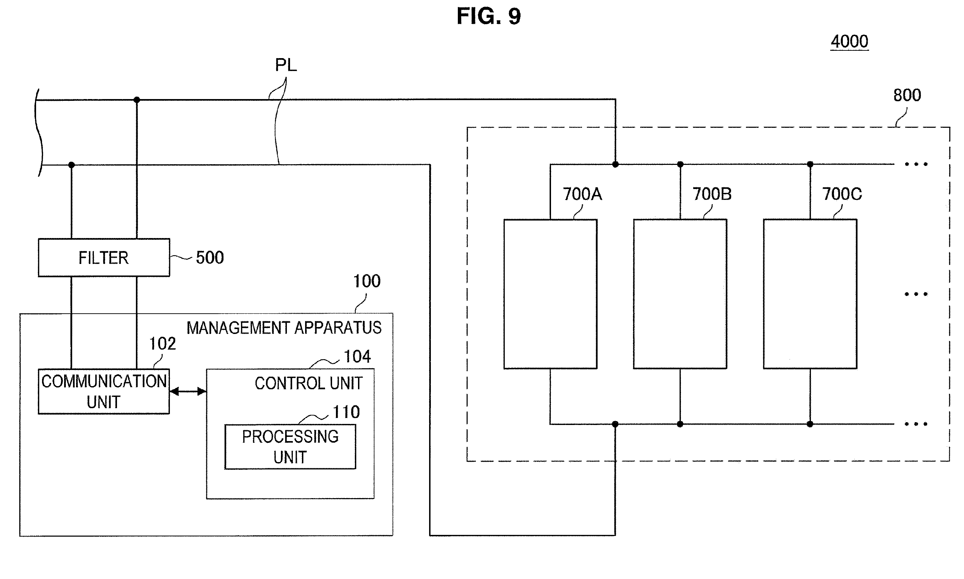

FIG. 9 is an explanatory diagram illustrating an example of the configuration of a management system 4000 according to a fourth embodiment, and illustrates another example of a management system which has a plurality of battery cells 300.

The management system 4000 has, for example, a management apparatus 100, a filter 500, and a battery pack 800. The battery pack 800 is configured to include a battery apparatus 700A, a battery apparatus 700B, a battery apparatus 700C, ..., and the battery apparatus 700A, the battery apparatus 700B, the battery apparatus 700C, ..., are connected in series to a power line PL. Here, it is possible for the battery pack 800 to be recognized as the battery apparatus according to the embodiment.

Each of the battery apparatus 700A, the battery apparatus 700B, the battery apparatus 700C, ..., has, for example, a configuration the same as the battery apparatus 700 according to the first embodiment (also including the configuration according to the modified example of the first embodiment) or the battery apparatus 700 according to the second embodiment (also including the configuration according to the modified example of the second embodiment). That is, the battery pack 800 illustrated in FIG. 9 has a plurality of battery cells 300, connected in series to a power line PL.

The management apparatus 100, and communication apparatuses 200 constituting each of the battery apparatus 700A, the battery apparatus 700B, the battery apparatus 700C, ..., can perform communication via the power line PL, by communication via a power line according to the embodiment, for example, by the configuration illustrated in FIG. 9. Further, for example, in the case where the communication apparatuses 200 include a communication collision avoidance (anti-collision) circuit, it is possible for each of the plurality of communication apparatuses 200 included in the battery pack 800 to perform steadier communication with the management apparatus 100.

Further, the management apparatus 100, and each of the constituent elements of the battery apparatus 700A, the battery apparatus 700B, the battery apparatus 700C, ..., constituting the management system 4000 has a configuration and function, for example, the same as each of the constituent elements constituting the management system 1000 illustrated in FIG. 1, or each of the constituent elements constituting the management system 2000 illustrated in FIG. 7.

Therefore, the management system 4000 illustrated in FIG. 9 can accomplish an effect the same as that of the management system 1000 according to the first embodiment illustrated in FIG. 1.

### <Modified example of the management system according to the fourth embodiment>

It is possible for the management system according to the third embodiment to take, for example, a configuration the same as that of the above described management system according to the modified example of the first embodiment or the above described management system according to the modified example of the second embodiment.

Further, in the case where the management system according to the fourth embodiment includes the current sensor 400C as the sensor 400, for example, each of the battery apparatus 700A, the battery apparatus 700B, the battery apparatus 700C, ..., may include the current sensor 400C, or it may be a configuration which has one current sensor 400C corresponding to the battery pack 800. In the case where the management system according to the fourth embodiment is a configuration which has one current sensor 400C corresponding to the battery pack 800, for example, the current sensor 400C is installed on the negative electrode side power line of each of the battery cells 300 connected in series.

Heretofore, while an explanation has been made by including a management system as the embodiment, the embodiment is not limited to such as mode. It is possible for the embodiment to be applied to various types of systems, for example, such as a management system of solar panels, a sensor network system via a power line network, or a management system relating to a moving body (hereinafter, simply illustrated as a "moving body according to the embodiment") including a battery cell and capable of being driven by power accumulated in the battery cell, such as an electric car or a hybrid vehicle.

For example, in the case where the management system as the embodiment is applied to a management system of solar panels, it becomes possible to perform management of the solar panels and maintenance of the solar panels, by accessing a state of the individual solar panels by sensors, and using sensor data (sensor information) acquired via a power line.

Further, for example, in the case where the management system as the embodiment is applied to a sensor network system via a power line network, it becomes possible to efficiently collect and manage a detected temperature, humidity, illuminance or the like, by accessing a temperature, humidity, illuminance or the like by a sensor sensor, and using sensor data (sensor information) acquired via a power line.

Note that, in the case where the management system as the embodiment is applied to a sensor network system via a power line network, the sensor of the management system as the embodiment, for example, may not be a sensor which detects a state of the battery cell. That is, in the case where the management system as the embodiment is applied to a sensor network system via a power line network, it is possible for the management system as the embodiment to take, for example, a configuration which does not have a battery cell.

Further, for example, in the case where the management system as the embodiment is applied to a management system relating to a moving body according to the embodiment, the constituent elements of the moving body according to the embodiment serve the role of the management system as the embodiment.

In the case where the constituent elements of the moving body according to the embodiment serve the role of the management system as the embodiment, for example, a battery apparatus included in the moving body according to the embodiment has the configuration of the battery apparatus 700 illustrated in FIG. 1 or FIG. 7, or the battery pack 800 illustrated in FIG. 8 or FIG. 9. Further, in the case where the constituent elements of the moving body according to the embodiment serve the role of the management system as the embodiment, for example, a control circuit, included in the moving body according to the embodiment and configured to include an MPU or the like, has the configuration of the management apparatus 100.

Note that, an application example, in the case where the constituent elements of the moving body according to the embodiment serve the role of the management system as the embodiment, is not limited to the example illustrated above. For example, in the case where the constituent elements of the moving body according to the embodiment serve the role of the management system as the embodiment, it is possible for a control circuit which controls the charging and discharging of the battery cell 300, included in the battery apparatus included in the moving body according to the embodiment, to serve the role of the management apparatus 100. In the case where the above described control circuit serves the role of the management apparatus 100, the battery apparatus according to the embodiment serves the role of the management system as the embodiment.

Further, an example of the case where the management system as the embodiment is applied to a management system relating to a moving body according to the embodiment is not limited to the example in which the constituent elements of the moving body according to the embodiment serve the role of the management system as the embodiment.

For example, in the case where the management system as the embodiment is applied to a management system relating to a moving body according to the embodiment, the moving body according to the embodiment and an external apparatus of the moving body according to the embodiment may serve the role of the management system as the embodiment. An example in which the battery apparatus 700 illustrated in FIG. 1 or FIG. 7 or the battery pack 800 illustrated in FIG. 8 or FIG. 9 is installed in the moving body according to the embodiment, or the management apparatus 100 is installed in an external apparatus of the moving body according to the embodiment, can be included, for example, as an example of the case where the moving body of the embodiment and an external apparatus of the moving body according to the embodiment serve the role of the management system as the embodiment. Here, a power supply apparatus which supplies power to the moving body according to the embodiment, or a power reception apparatus to which power is supplied from the moving body according to the embodiment, can be included, for example, as an external apparatus of the moving body according to the embodiment.

Further, heretofore, while a description has been made by including a management apparatus as a constituent element of the management system according to the embodiment, the embodiment is not limited to such a mode. The embodiment can be applied to various types of devices or apparatuses, for example, such as a computer such as a Personal Computer (PC) or a server, a moving body according to the embodiment, a power supply apparatus (for example, an apparatus, charger or the like relating to a charge stand) capable of supplying power to another apparatus via a power line, or a power reception apparatus (for example, an electronic device or the like) to which power is supplied from another apparatus via a power line. Further, for example, the embodiment can be applied to a processing IC, capable of being incorporated into a device or apparatus such as described above.

Further, heretofore, while a description has been made by including a communication apparatus as a constituent element of the management system according to the embodiment, the embodiment is not limited to such a mode. The embodiment can be applied to various types of devices, apparatuses, facilities or infrastructures, for example, such as a battery apparatus (also including a battery pack) including a battery cell, a structure (for example, a building, road or the like) in which sensors are installed, or a moving body according to the embodiment.

### (Program according to the embodiment)

A battery cell can be managed, based on a detected state of the battery cell, by having a program for causing a computer to function as a management apparatus according to the embodiment (for example, a program capable of executing a process relating to the management method according to the embodiment, such as the above described management process) executed in the computer. Further, a management system, capable of accomplishing the effect accomplished by the above-described management system according to the embodiment, is implemented by having a program for causing a computer to function as a management apparatus according to the embodiment executed in the computer.

The preferred embodiments of the present disclosure have been described above with reference to the accompanying drawings, whilst the present invention is not limited to the above examples, of course. A person skilled in the art may find various alternations and modifications within the scope of the appended claims, and it should be understood that they will naturally come under the technical scope of the present disclosure.

For example, the above illustrates that a program (computer program) causing a computer to function as a management apparatus according to the embodiment is provided, but the embodiment can further provide a recording medium caused to store the program.

The above configuration illustrates an example of the embodiment and naturally comes under the technical scope of the present disclosure.

Additionally, the present technology may also be configured as below.
(1) A management apparatus, including:
   a processing unit which performs a process related to management of a battery cell, based on information related to the battery cell, acquired via a power line connected to the battery cell from a communication apparatus electrically connected to the power line,
   wherein the information related to the battery cell includes sensor information showing a detection result detected by a sensor which detects a state of the battery cell, and
   wherein the processing unit performs a process according to the detection result of the sensor.
(2) The management apparatus according to (1),
   wherein the sensor information shows a temperature of the battery cell detected by a temperature sensor, and
   wherein the processing unit
   determines the state of the battery cell based on the temperature of the battery cell shown by the sensor information, and
   in a case where it is determined that the battery cell is not normal, causes a use of the battery cell to be restricted.
(3) The management apparatus according to (1) or (2),
   wherein the information related to the battery cell includes the sensor information showing a voltage of the battery cell detected by a voltage sensor, and
   wherein, in a case where it is determined that the battery cell is in a state where the battery cell is charging,
   the processing unit performs a charge control for the battery cell based on the voltage of the battery cell shown by the sensor information.
(4) The management apparatus according to any one of (1) to (3),
   wherein the information related to the battery cell includes the sensor information showing a voltage of the battery cell detected by a voltage sensor, and
   wherein, in a case where it is determined that the battery cell is in a state where the battery cell is discharging,
   the processing unit determines a discharge state of the battery cell based on the voltage of the battery cell shown by the sensor information, and
   causes a discharge of the battery cell to be restricted in accordance with a determination result.
(5) The management apparatus according to any one of (1) to (4),
   wherein the sensor information shows a voltage of the battery cell detected by a voltage sensor, and
   wherein the processing unit estimates a charge amount accumulated in the battery cell based on the voltage of the battery cell shown by the sensor information.
(6) The management apparatus according to any one of (1) to (5),
   wherein the processing unit causes log information based on the detection result of the sensor shown by the sensor information, and a recording command for recording the log information in a recording medium, to be transmitted to the communication apparatus via the power line.
(7) The management apparatus according to any one of (1) to (6), further including:
   a communication unit which performs communication via the power line with the communication apparatus,
   wherein the processing unit acquires the information related to the battery cell from the communication apparatus by enabling the communication unit to perform communication with the communication apparatus.
(8) The management apparatus according to (7),
   wherein the communication unit
   transmits a signal for transmitting the information related to the battery cell to the communication apparatus, and
   receives the information related to the battery cell transmitted by having load modulation performed based on the signal received in the communication apparatus.
(9) The management apparatus according to (7) or (8),
   wherein the communication unit
   is connected to a filter which is connected to the power line, cuts off at least a signal with a frequency of power flowing in the power line and does not cut off a high-frequency signal with a frequency higher than the frequency of power, and
   performs communication with the communication apparatus by transmitting the high-frequency signal via the filter and the power line.
(10) A communication apparatus, including:
   a communication unit, electrically connected to a power line connected to a battery cell,
   which is driven by obtaining power from a high-frequency signal with a frequency higher than a frequency of power flowing in the power line, transmitted from an external apparatus via the power line,
   which supplies the power obtained from the high-frequency signal to a sensor which detects a state of the battery cell, and
   which transmits information related to the battery cell, obtained from the sensor driven by the supplied power, and including sensor information showing a detection result detected by the sensor, to the external apparatus by load modulation via the power line.
(11) The communication apparatus according to (10),
   wherein the communication unit is connected to a positive electrode side power line and a negative electrode side power line of the battery cell.
(12) The communication apparatus according to (10),
   wherein the communication unit is connected to a positive electrode side power line or a negative electrode side power line of the battery cell.
(13) The communication apparatus according to any one of (10) to (12), further including:
   the battery cell.
(14) The communication apparatus according to any one of (10) to (13), further including:
   the sensor.
(15) A management method, including:
   a step which performs a process related to management of a battery cell, based on information related to the battery cell, acquired via a power line connected to the battery cell from a communication apparatus electrically connected to the power line,
   wherein the information related to the battery cell includes sensor information showing a detection result detected by a sensor which detects a state of the battery cell, and
   wherein a process according to the detection result of the sensor is performed in the step which performs the process related to the management of the battery cell.
(16) A management system, including:
   a communication apparatus electrically connected to a power line connected to a battery cell; and
   a management apparatus which performs a process related to management of the battery cell, based on information related to the battery cell, acquired via the power line from the communication apparatus,
   wherein the communication apparatus includes a communication unit,
   which is driven by obtaining power from a high-frequency signal with a frequency higher than a frequency of power flowing in the power line, transmitted by the management apparatus via the power line,
   which supplies the power obtained from the high-frequency signal to a sensor which detects a state of the battery cell, and
   which transmits the information related to the battery cell, obtained from the sensor driven by the supplied power, and including sensor information showing a detection result detected by the sensor, to the management apparatus by load modulation via the power line,
   wherein the management apparatus includes a processing unit which performs a process related to management of the battery cell, based on the information related to the battery cell, transmitted from the communication apparatus, and
   wherein the processing unit performs a process according to the detection result of the sensor shown by the sensor information included in the information related to the battery cell.

### Reference Signs List

- 100: management apparatus
- 102, 202: communication unit
- 104: control unit
- 110: processing unit
- 200: communication apparatus
- 300: battery cell
- 400: sensor
- 400A: temperature sensor
- 400B: voltage sensor
- 400C: current sensor
- 500, 600: filter
- 700, 700A, 700B, 700C: battery apparatus
- 800: battery pack
- 1000, 2000, 3000, 4000: management system

## Claims

1. A management apparatus, comprising:
a processing unit which performs a process related to management of a battery cell, based on information related to the battery cell, acquired via a power line connected to the battery cell from a communication apparatus electrically connected to the power line,
wherein the information related to the battery cell includes sensor information showing a detection result detected by a sensor which detects a state of the battery cell, and
wherein the processing unit performs a process according to the detection result of the sensor.

2. The management apparatus according to claim 1,
wherein the sensor information shows a temperature of the battery cell detected by a temperature sensor, and
wherein the processing unit
determines the state of the battery cell based on the temperature of the battery cell shown by the sensor information, and
in a case where it is determined that the battery cell is not normal, causes a use of the battery cell to be restricted.

3. The management apparatus according to claim 1,
wherein the information related to the battery cell includes the sensor information showing a voltage of the battery cell detected by a voltage sensor, and
wherein, in a case where it is determined that the battery cell is in a state where the battery cell is charging,
the processing unit performs a charge control for the battery cell based on the voltage of the battery cell shown by the sensor information.

4. The management apparatus according to claim 1,
wherein the information related to the battery cell includes the sensor information showing a voltage of the battery cell detected by a voltage sensor, and
wherein, in a case where it is determined that the battery cell is in a state where the battery cell is discharging,
the processing unit determines a discharge state of the battery cell based on the voltage of the battery cell shown by the sensor information, and
causes a discharge of the battery cell to be restricted in accordance with a determination result.

5. The management apparatus according to claim 1,
wherein the sensor information shows a voltage of the battery cell detected by a voltage sensor, and
wherein the processing unit estimates a charge amount accumulated in the battery cell based on the voltage of the battery cell shown by the sensor information.

6. The management apparatus according to claim 1,
wherein the processing unit causes log information based on the detection result of the sensor shown by the sensor information, and a recording command for recording the log information in a recording medium, to be transmitted to the communication apparatus via the power line.

7. The management apparatus according to claim 1, further comprising:
a communication unit which performs communication via the power line with the communication apparatus,
wherein the processing unit acquires the information related to the battery cell from the communication apparatus by enabling the communication unit to perform communication with the communication apparatus.

8. The management apparatus according to claim 7,
wherein the communication unit
transmits a signal for transmitting the information related to the battery cell to the communication apparatus, and
receives the information related to the battery cell transmitted by having load modulation performed based on the signal received in the communication apparatus.

9. The management apparatus according to claim 7,
wherein the communication unit
is connected to a filter which is connected to the power line, cuts off at least a signal with a frequency of power flowing in the power line and does not cut off a high-frequency signal with a frequency higher than the frequency of power, and
performs communication with the communication apparatus by transmitting the high-frequency signal via the filter and the power line.

10. A communication apparatus, comprising:
a communication unit, electrically connected to a power line connected to a battery cell,
which is driven by obtaining power from a high-frequency signal with a frequency higher than a frequency of power flowing in the power line, transmitted from an external apparatus via the power line,
which supplies the power obtained from the high-frequency signal to a sensor which detects a state of the battery cell, and
which transmits information related to the battery cell, obtained from the sensor driven by the supplied power, and including sensor information showing a detection result detected by the sensor, to the external apparatus by load modulation via the power line.

11. The communication apparatus according to claim 10,
wherein the communication unit is connected to a positive electrode side power line and a negative electrode side power line of the battery cell.

12. The communication apparatus according to claim 10,
wherein the communication unit is connected to a positive electrode side power line or a negative electrode side power line of the battery cell.

13. The communication apparatus according to claim 10, further comprising:
the battery cell.

14. The communication apparatus according to claim 10, further comprising:
the sensor.

15. A management method, comprising:
a step which performs a process related to management of a battery cell, based on information related to the battery cell, acquired via a power line connected to the battery cell from a communication apparatus electrically connected to the power line,
wherein the information related to the battery cell includes sensor information showing a detection result detected by a sensor which detects a state of the battery cell, and
wherein a process according to the detection result of the sensor is performed in the step which performs the process related to the management of the battery cell.

16. A management system, comprising:
a communication apparatus electrically connected to a power line connected to a battery cell; and
a management apparatus which performs a process related to management of the battery cell, based on information related to the battery cell, acquired via the power line from the communication apparatus,
wherein the communication apparatus includes a communication unit,
which is driven by obtaining power from a high-frequency signal with a frequency higher than a frequency of power flowing in the power line, transmitted by the management apparatus via the power line,
which supplies the power obtained from the high-frequency signal to a sensor which detects a state of the battery cell, and
which transmits the information related to the battery cell, obtained from the sensor driven by the supplied power, and including sensor information showing a detection result detected by the sensor, to the management apparatus by load modulation via the power line,
wherein the management apparatus includes a processing unit which performs a process related to management of the battery cell, based on the information related to the battery cell, transmitted from the communication apparatus, and
wherein the processing unit performs a process according to the detection result of the sensor shown by the sensor information included in the information related to the battery cell.
